# FASCICULE DE BREVET EUROPEEN

(11) **EP 2 571 373 B1**
(45) Date de publication et mention de la délivrance du brevet: **06.03.2019**
(21) Numéro de dépôt: 11726885.4
(22) Date de dépôt: 18.05.2011
(51) Int. Cl.: A23C 9/12

(54) **APPAREIL ELECTRIQUE PREVU POUR LA REALISATION DE PREPARATIONS CULINAIRES EN PORTIONS SEPAREES**
ELEKTROGERÄT ZUR HERSTELLUNG VON SPEISENZUBEREITUNGEN IN SEPARATEN PORTIONEN
ELECTRICAL APPLIANCE PROVIDED FOR PRODUCING CULINARY PREPARATIONS IN SEPARATE PORTIONS

(30) Priorité: 18.05.2010 FR 1053845
(43) Date de publication de la demande: 27.03.2013
(73) Titulaire: SEB S.A., 69130 Ecully (FR)
(72) Inventeur: CHARLES, Patrick, F-65290 Louey (FR); LACOURPAILLE, Gérard, F-65380 Ossun (FR); ASTEGNO, Jean-Paul, F-64420 Espoey (FR)
(74) Mandataire: Bourrières, Patrice
(86) Numéro de dépôt international: PCT/FR2011/051127
(87) Numéro de publication internationale: WO 2011/144870

(56) Documents cités:
- WO-A2-2008/006971
- FR-A- 837 305
- FR-A- 1 048 525
- FR-A- 1 051 779
- FR-A- 1 089 213
- JP-U- S6 047 417
- US-A- 3 111 574
- US-A- 4 009 368
- Sunbeam: "VitaSteam Electronic Programmable Food Steamer Instruction Booklet ST6820", , 1 January 2007 (2007-01-01), XP055413276, Retrieved from the Internet: URL:https://www.sunbeam.co.nz/Root/Specifi cations/InstructionBooklet/ST6820_ib_1.pdf [retrieved on 2017-10-06]

## Description

La présente invention concerne le domaine technique des appareils électriques prévus pour la réalisation de préparations culinaires en portions séparées, notamment en portions individuelles, telles que notamment yaourts ou entremets.

La réalisation de préparations à base de lait et de ferments, telles que les yaourts, ou à base de lait et de présure, telles que le fromage blanc ou le fromage caillé appelé aussi faisselle, nécessite le plus souvent une transformation (fermentation) relativement longue, pouvant atteindre plusieurs heures. Les températures usuelles atteintes par les aliments pour la réalisation de ces préparations sont de l'ordre de 36 à 40°C pour la réalisation de fromage blanc ou de fromage caillé, et de l'ordre de 40 à 50°C pour la réalisation de yaourts.

La réalisation d'entremets sucrés et/ou salés tels que crèmes desserts, crèmes brûlées, mais aussi de soufflés, flans, clafoutis ou fondants au chocolat nécessite une cuisson moins longue (usuellement jusqu'à environ une heure) mais à température plus élevée. Les températures usuelles atteintes par les aliments pour la réalisation de ces préparations sont par exemple de l'ordre de 85 à 95°C pour la réalisation de crèmes brûlées.

Il est connu du document FR 2 311 522 un appareil électrique de cuisson à arrêt automatique pour entremets. Cet appareil comporte une enceinte de cuisson prévue pour recevoir plusieurs ramequins contenant les mets à cuire. Un dispositif de chauffe à inertie thermique permet d'atteindre une température de cuisson et de maintenir ladite température de cuisson avant d'entamer la phase de refroidissement. La construction proposée présente toutefois l'inconvénient d'être relativement délicate à mettre au point pour obtenir les évolutions de température souhaitées. Par ailleurs, les récipients sont posés sur la base chauffante, ce qui entraine des zones de chauffage hétérogène.

Un appareil selon le préambule de la revendication 1 est connu du document FR 837 305.

Un objet de la présente invention est de proposer un appareil électrique pour la réalisation de préparations culinaires en portions séparées, dans lequel la transformation des préparations soit davantage homogène à l'intérieur d'un même contenant.

Un autre objet de la présente invention est de proposer un appareil électrique pour la réalisation de préparations culinaires en portions séparées, dans lequel la transformation des préparations soit davantage homogène d'un contenant à l'autre.

Ces objets sont atteints avec un appareil électrique pour la réalisation de préparations culinaires en portions séparées, comportant une base chauffante, un couvercle principal, et au moins un récipient pour contenir la préparation alimentaire, l'appareil comprenant en outre un support intercalé entre la base chauffante et le couvercle principal, le support comprenant un plateau portant un orifice pour le ou pour chaque récipient, du fait que la base chauffante comprend une plaque métallique associée à des moyens de chauffage, la plaque métallique s'étendant en dessous du fond du ou des récipients, que le support comprend le ou les orifices pour suspendre le ou chaque récipient de sorte que le fond du ou de chaque récipient soit distant de la plaque métallique, que le support comprend une couronne reposant sur la périphérie de la base chauffante, le support entourant le ou les récipients sur la majeure partie de la hauteur du ou des récipients, l'espace délimité par la plaque métallique, le plateau et la couronne du support formant un espace de chauffage sensiblement homogène de la surface extérieure du ou des récipients, que la plaque métallique comprend une cavité dimensionnée pour recevoir une quantité calibrée de liquide, et que l'appareil comprend des moyens de commande assurant le fonctionnement des moyens de chauffage selon un premier mode limitant la température de la plaque métallique en dessous de 100°C et selon un deuxième mode autorisant une température de la plaque métallique supérieure à 100°C, pour permettre l'évaporation de l'eau contenue dans la cavité.

En évitant le contact direct entre les récipients et la base chauffante l'appareil selon l'invention assure un chauffage optimal de la préparation culinaire et améliore ainsi ses qualités organoleptiques. La plaque métallique s'étend en dessous du fond des récipients pour faciliter la réalisation d'une chauffe homogène sous les récipients. Le support entourant le ou les récipients sur la majeure partie de la hauteur du ou des récipients permet de favoriser un chauffage homogène à l'intérieur du ou des récipients, en évitant un chauffage préférentiel d'un côté du ou des récipients par la base chauffante. Le support entourant le ou les récipients sur la majeure partie de la hauteur du ou des récipients permet également de favoriser un chauffage homogène d'un récipient à l'autre, en évitant un chauffage latéral partiel issu d'une paroi de la base chauffante, et permet notamment d'envisager l'utilisation d'un ou plusieurs récipients entourés par d'autres récipients. De plus le support ainsi proposé portant un ou plusieurs récipients peut être posé sur une surface plane.

Selon une forme de réalisation avantageuse, le fond de chaque récipient dépasse en dessous du support. Cette disposition permet de faciliter la préhension du ou des récipients en écartant le ou les récipients du ou des orifices du support lorsque le support est posé sur une surface plane.

Avantageusement encore, la couronne est réalisée en matériau plastique.

Avantageusement encore, le plateau est amovible.

Avantageusement encore la partie supérieure du support comprend un bord supérieur pour poser le couvercle principal.

Avantageusement encore la surface extérieure du support comprend des poignées de préhension.

Avantageusement encore chaque récipient comprend un épaulement au voisinage d'un bord supérieur, l'épaulement venant en appui sur le bord de l'orifice associé du support.

Selon un mode de réalisation, les moyens de chauffage sont disposés dans la partie centrale de la plaque métallique.

Avantageusement encore les moyens de chauffage sont formés par un élément chauffant blindé fixé sous la plaque métallique au niveau de la cavité.

Avantageusement encore la plaque métallique est en aluminium.

Avantageusement encore l'appareil électrique comprend des moyens de commande assurant le fonctionnement de l'élément chauffant selon au moins deux températures de consigne comprises entre 35° et 90°.

Selon une forme de réalisation avantageuse, la plaque métallique est logée dans une embase.

Avantageusement alors, un joint est monté sur la périphérie de la plaque métallique, afin d'isoler thermiquement la plaque métallique de l'embase.

Avantageusement alors, pour éviter un chauffage direct du support, le support repose sur la base chauffante en périphérie du joint.

Avantageusement encore, pour faciliter la réalisation d'une chauffe homogène sous les récipients, la base chauffante comprend des moyens de chauffage surfacique placés sous les récipients.

D'autres caractéristiques et avantages de l'invention se dégageront de la description qui va suivre en regard des dessins annexés qui ne sont donnés qu'à titre d'exemples non limitatifs :
- la figure 1 est une vue de face d'un appareil électrique pour la réalisation de préparations culinaires en portions séparées selon l'invention,
- la figure 2 est une vue en perspective et en éclaté de l'appareil illustré sur la figure 1,
- la figure 3 est une vue en coupe transversale de l'appareil illustré sur les figures 1 et 2,
- la figure 4 est une vue en perspective et éclaté de la base chauffante de l'appareil illustré sur les figures 1 à 3,
- la figure 5 est une vue en coupe transversale de la base chauffante illustrée sur la figure 4.

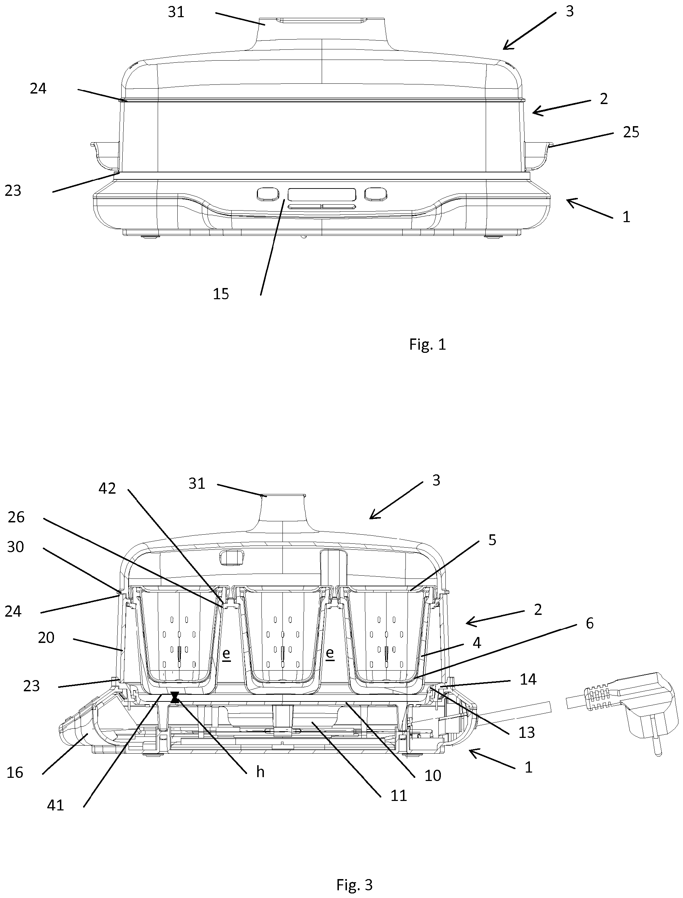

Un exemple de réalisation d'un appareil électrique pour la réalisation de préparations culinaires en portions séparées est illustré aux figures 1 à 5.

La figure 1 montre un appareil électrique pour la réalisation de préparations culinaires en portions séparées, comportant une base chauffante 1, un support 2 pour au moins un récipient 4 destiné à recevoir la préparation alimentaire et un couvercle principal 3. Selon l'invention, il est possible de préparer différents types d'entremets et de préparations à base de lait dans les récipients.

Comme illustré sur la figure 1, le support 2 est intercalé entre la base chauffante 1 et le couvercle principal 3. Ainsi, le support 2 présente un bord inférieur 23 reposant sur la périphérie de la base chauffante 1 et la partie supérieure du support 2 comprend un bord supérieur 24 pour poser le couvercle principal 3. La surface extérieure du support 2 comprend des poignées 25 de préhension.

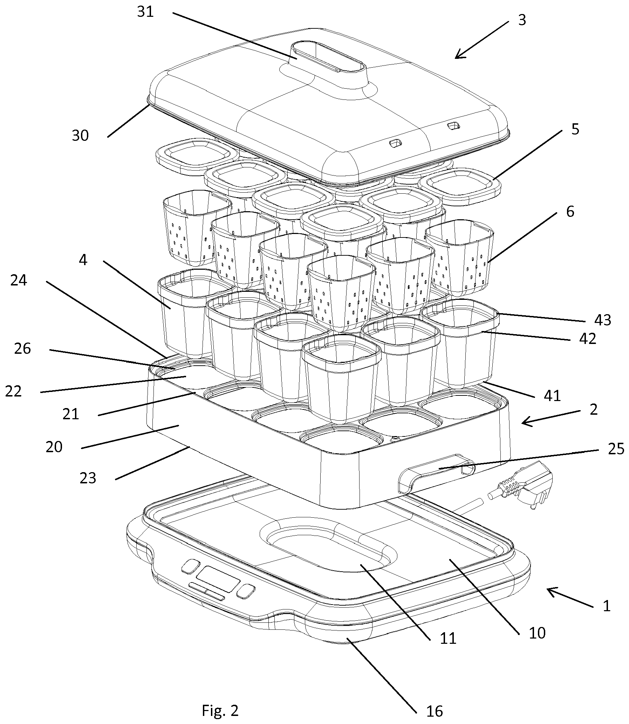

Comme le montre la figure 2, le support 2 comprend une couronne 20 reposant sur la périphérie de la base chauffante 1. La couronne 20 forme la paroi latérale du support 2. Les poignées de préhension 25 sont issues de la couronne 20. La couronne 20 est de préférence réalisée en matériau peu conducteur de chaleur, par exemple en matériau plastique.

Le support 2 comprend également un plateau 21 sensiblement parallèle à la base chauffante 1. Le plateau 21 occupe l'espace intérieure de la couronne 20. Selon l'invention, le plateau 21 est muni d'orifices 22. Ces orifices 22 permettent de positionner les récipients 4 dans l'appareil électrique pour la réalisation de préparations culinaires. Selon la variante de réalisation représentée, le plateau 21 comprend douze orifices 22. Sans sortir du cadre de l'invention, il est possible de pratiquer un nombre différent d'orifices et notamment de ne réaliser qu'un seul orifice pour un seul récipient, le support 2 entourant alors ledit récipient sur la majeure partie de la hauteur dudit récipient. Ainsi le support 2 comprend au moins un orifice 22 pour suspendre chaque récipient 4 de sorte que le fond 41 de chaque récipient 4 soit distant de la base chauffante 1. Le plateau 21 porte le ou les orifices 22 pour chaque récipient 4.

Comme le montre plus précisément la vue coupe de la figure 3, le support 2 permet de suspendre les récipients 4 au-dessus de la base chauffante 1. Ainsi, selon l'une des caractéristiques de l'invention les récipients 4 ne reposent pas sur la base chauffante 1. Au contraire, le fond 41 des récipients 4 est distant d'une hauteur h de la base chauffante 1. A titre d'exemple, la hauteur h est comprise entre 2 et 15 mm, et de préférence entre 3 et 10 mm. Tel que bien visible sur la figure 3, le support 2 entoure les récipients 4 sur la majeure partie de la hauteur des récipients 4. Plus particulièrement, le support 2 s'étend le long de la plus grande partie de la paroi latérale des récipients 4 s'étendant en dessous des orifices 22, et s'arrête un peu au dessus du fond 41 des récipients 4. Ainsi le fond 41 de chaque récipient 4 dépasse en dessous du support 2.

Chaque récipient 4 comprend un épaulement 42 au voisinage d'un bord supérieur 43. Ainsi, lorsque le récipient 4 est mis en place dans le support 2, l'épaulement 42 vient en appui sur le bord 26 de l'orifice 22 associé du support 2. Le récipient 4 est alors bloqué en translation et n'atteint pas la base chauffante 1. Les dimensions de la partie inférieure de chaque récipient 4 sont donc inférieures aux dimensions de l'orifice 22. Par ailleurs, la zone de contact entre l'épaulement 42 et le bord 26 de l'orifice 22 crée une zone d'étanchéité permettant d'isoler la partie supérieure du récipient 4 de la chaleur ou d'éventuels dégagements de vapeur provenant de la base chauffante 1. Ainsi le support 2 comprend au moins un orifice 22 pour suspendre chaque récipient 4 de sorte que le fond 41 de chaque récipient 4 soit distant de la base chauffante 1.

Selon la variante de réalisation représentée, les récipients 4 peuvent être équipés de couvercles 5. Ces couvercles 5 sont utilisés uniquement pour la conservation des préparations culinaires après cuisson ou fermentation dans l'appareil selon l'invention. De même, les récipients 4 peuvent comprendre un réceptacle interne perforé 6 pour la préparation de fromage blanc ou faisselle.

La hauteur du plateau 21 sur la couronne 20 du support 2 et la hauteur de la couronne 20 permettent notamment de manipuler facilement l'ensemble des récipients 4 grâce aux poignées de préhension 25. Dans la variante de réalisation illustrée sur les figures, le support 2 est réalisé en une seule pièce.

Selon une variante de réalisation non représentée, la hauteur de la couronne 20 est déterminée pour que même lorsque le support 2 ne repose pas sur la base chauffante 1, il soit possible de poser le support 2 et ses récipients 4 sur une surface plane, sans que le fond 41 des récipients 4 ne repose sur cette surface.

Comme décrit précédemment, le couvercle principal 3 repose sur le bord supérieur 24 du support 2. Pour assurer une certaine étanchéité de fermeture entre le couvercle principal 3 et le support 2, la périphérie du couvercle principal 3 comprend un épaulement 30 qui vient en appui sur le bord supérieur 24 du support 2. Le couvercle principal 3 comprend également une poignée 31 de préhension.

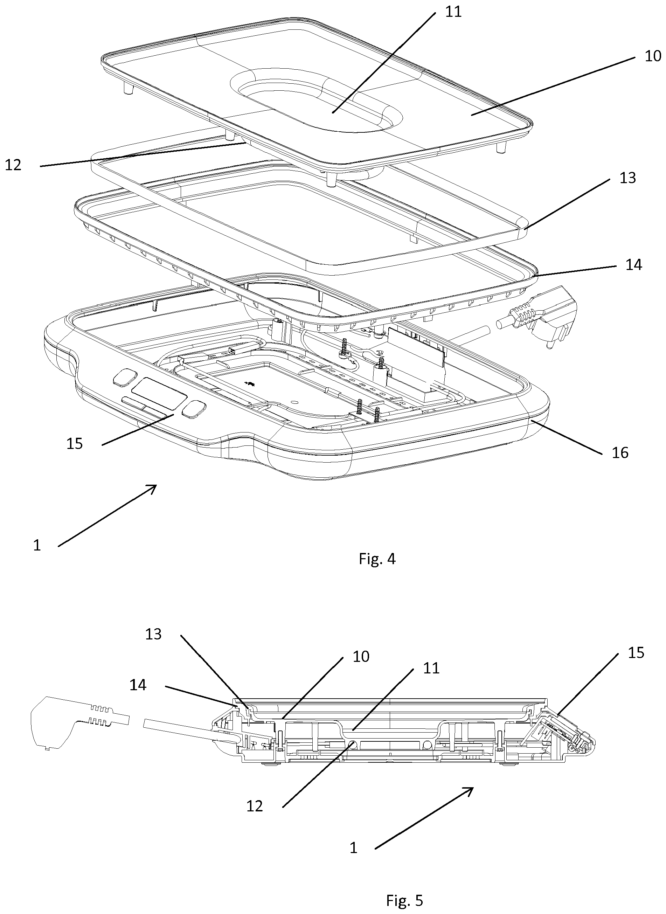

La base chauffante 1 va à présent être décrite en référence aux figures 4 et 5. La base chauffante 1 de l'appareil selon l'invention comprend une plaque métallique 10 associée à des moyens de chauffage 12. La plaque métallique est logée dans l'embase 16. L'embase 16 comprend en outre un panneau de commande 15 et l'électronique associée pour piloter les moyens de chauffage 12. Afin d'isoler thermiquement la plaque métallique 10 de l'embase 16, un joint 13 est monté sur la périphérie de la plaque métallique 10. Par ailleurs, une entretoise 14 est utilisée pour l'assemblage de la plaque métallique 10 sur l'embase 16. Lors de l'assemblage, le joint 13 est monté en force sur le bord de la plaque métallique 10. Ensuite, l'entretoise 14 est clipsée sur l'embase 16. Enfin, la plaque métallique 10 munie du joint 13 est insérée dans l'embase 16. L'entretoise 14 forme également la surface d'appui du bord inférieur 23 du support 2. L'entretoise 14 étant isolée thermiquement de la plaque métallique 10 par le joint 13, le support 2 ne subit pas d'exposition à une température excessive. Tel que bien visible sur la figure 3, le support 2 repose sur la base chauffante 1 en périphérie du joint 13.

La plaque métallique 10 est par exemple réalisée en aluminium pour assurer une répartition homogène de la température sur toute la surface de la plaque métallique 10, et de préférence en aluminium moulé permettant d'obtenir un bon rayonnement pour chauffer les récipients 4. Tel que bien visible sur les figures 2 et 3, la plaque métallique 10 s'étend en dessous du fond 41 des récipients 4. Les moyens de chauffage 12 sont disposés dans la partie centrale de la plaque métallique 10. La plaque métallique 10 peut comprendre une cavité 11 dimensionnée pour recevoir une quantité calibrée de liquide, par exemple sensiblement au centre de la plaque métallique 10. Les dimensions de la cavité 11 sont déterminées pour accueillir une quantité calibrée de liquide tel que de l'eau. A titre d'exemple, le volume de la cavité 11 permet d'accueillir une quantité d'eau comprise entre 10 et 20 cl. La plaque métallique 10 présente un bord relevé permettant de contenir les condensats formés sous le support 2. Si désiré le fond de la plaque métallique 10 peut présenter une inclinaison du bord relevé vers la cavité 11, de manière à recueillir lesdits condensats dans la cavité 11. Les moyens de chauffage 12 sont par exemple formés par un élément chauffant blindé, fixé sous la plaque métallique 10 par exemple au niveau de la cavité 11, tel que visible sur la figure 4.

La base chauffante 1 comprend ainsi des moyens de chauffage surfacique placés sous les récipients 4, permettant de réaliser une chauffe homogène sous les récipients 4.

L'utilisation du support 2 selon l'invention permet d'éviter un contact direct entre les récipients 4 et la plaque métallique 10 chauffante, ce qui permet d'homogénéiser la montée et le maintien en température des récipients 4. En effet, l'espace délimité par la plaque métallique 10, le plateau 21 et la couronne 20 du support, forme un espace de chauffage e sensiblement homogène de la surface extérieure des récipients 4. Ce mode de chauffage permet d'améliorer la qualité des préparations culinaires réalisées dans l'appareil selon l'invention. Afin d'améliorer l'isolation thermique de l'espace de chauffage e, le support 2 est réalisé en matériau peu conducteur de chaleur, par exemple en matière plastique.

L'appareil selon l'invention peut fonctionner selon au moins deux modes : un premier mode dit à chaleur sèche, et un deuxième mode dit à chaleur humide.

Le premier mode dit à chaleur sèche est particulièrement adapté pour la préparation de yaourt par fermentation de ferment, de fromage blanc ou de faisselle par fermentation de présure. Dans ce premier mode, la température dans l'espace de chauffage e est régulée à environ 45° pour les yaourts, ou 38°C pour les fromages blancs ou les faisselles. Pour cela et de façon connue en soi, un dispositif de régulation thermostatique (non représenté) régule l'alimentation électrique des moyens de chauffage 12 pour maintenir cette température dans l'espace de chauffage e. Ce dispositif de régulation thermostatique comporte par exemple un capteur de type CTN monté contre la plaque métallique 10, avec une température de consigne pour l'alimentation électrique des moyens de chauffage 12 de l'ordre de 60°C pour la fabrication de yaourts.

Le deuxième mode, dit à chaleur humide, permet la cuisson d'entremets. Ce deuxième mode nécessite une température plus importante. L'ambiance humide permet une montée rapide et un maintien de cette température. Pour mettre en oeuvre ce deuxième mode, la cavité 11 est remplie de la quantité d'eau calibrée, par exemple 150 ml et la température de régulation est augmentée au dessus de 100°C pour permettre une évaporation de l'eau contenue dans la cavité. Si désiré, la puissance des moyens de chauffage 12 peut être également modulée en alternant des périodes de chauffe et des périodes d'arrêt.

Le panneau de commande 15 permet de choisir entre plusieurs programmes mettant en oeuvre l'un ou l'autre des deux modes. La fabrication de yaourts ou de fromages blancs peut faire l'objet de deux programmes distincts utilisant le premier mode. Ainsi l'appareil électrique comprend des moyens de commande assurant le fonctionnement des moyens de chauffage 12 selon un premier mode limitant la température de la plaque métallique 10 en dessous de 100°C et selon un deuxième mode autorisant une température de la plaque métallique 10 supérieure à 100°C. Sans sortir du cadre de l'invention, le panneau de commande 15 et l'électronique associée peuvent permettre un fonctionnement selon d'autres températures de consigne comprises par exemple entre 35° et 90°, avec ou sans ajout de liquide dans la cavité 11.

Ainsi, comme décrit précédemment, la mise en place du support 2 selon l'invention améliore les qualités organoleptiques des préparations culinaires en assurant un chauffage optimal des récipients 4 tout au long de la cuisson ou de la fermentation. Par ailleurs, le support 2 facilite la manipulation des récipients 4 avant et après la cuisson ou la fermentation.

Selon un mode de réalisation non représenté, le plateau est amovible de la couronne. Ainsi, plusieurs plateaux comprenant des tailles et des formes d'orifices différents pourraient être montés, par exemple par clipsage, sur la couronne.

A titre de variante, la base chauffante 1 pourrait comprendre des moyens de chauffage surfacique autres que la plaque métallique 10 et l'élément chauffant 12, par exemple un autocollant chauffant fixé sous une plaque supérieure de la base chauffante 1, ou encore un élément chauffant sérigraphié sous une plaque supérieure de la base chauffante 1.

## Revendications

1. Appareil électrique pour la réalisation de préparations culinaires en portions séparées, comportant une base chauffante (1), un couvercle principal (3), et au moins un récipient (4) pour contenir la préparation alimentaire, l'appareil comprenant en outre un support (2) intercalé entre la base chauffante (1) et le couvercle principal (3), le support (2) comprenant un plateau (21) portant un ou des orifice(s) (22) pour le ou pour chaque récipient (4), **caractérisé en ce que** la base chauffante (1) comprend une plaque métallique (10) associée à des moyens de chauffage (12), la plaque métallique (10) s'étendant en dessous du fond (41) du ou des récipient(s) (4), **en ce que** le support (2) comprend le ou les orifice(s) (22) pour suspendre le ou chaque récipient (4) de sorte que le fond (41) du ou de chaque récipient (4) soit distant de la plaque métallique (10), **en ce que** le support (2) comprend une couronne (20) reposant sur la périphérie de la base chauffante (1), le support (2) entourant le ou les récipient(s) (4) sur la majeure partie de la hauteur du ou des récipient(s) (4), l'espace délimité par la plaque métallique (10), le plateau (21) et la couronne (20) du support (2) formant un espace de chauffage (e) sensiblement homogène de la surface extérieure du ou des récipient(s) (4), **en ce que** la plaque métallique (10) comprend une cavité (11) dimensionnée pour recevoir une quantité calibrée de liquide, et **en ce que** l'appareil comprend des moyens de commande assurant le fonctionnement des moyens de chauffage (12) selon un premier mode limitant la température de la plaque métallique (10) en dessous de 100°C et selon un deuxième mode autorisant une température de la plaque métallique (10) supérieure à 100°C, pour permettre l'évaporation de l'eau contenue dans la cavité (11).

2. Appareil électrique pour la réalisation de préparations culinaires en portions séparées selon la revendication 1, **caractérisé en ce que** le fond (41) de chaque récipient (4) dépasse en dessous du support (2).

3. Appareil électrique pour la réalisation de préparations culinaires en portions séparées selon l'une des revendications 1 ou 2, **caractérisé en ce que** la couronne (20) est réalisé en matériau plastique.

4. Appareil électrique pour la réalisation de préparations culinaires en portions séparées selon l'une des revendications 1 à 3, **caractérisé en ce que** le plateau (21) est amovible.

5. Appareil électrique pour la réalisation de préparations culinaires en portions séparées selon l'une des revendications 1 à 4, **caractérisé en ce que** la partie supérieure du support (2) comprend un bord supérieur (24) pour poser le couvercle principal (3).

6. Appareil électrique pour la réalisation de préparations culinaires en portions séparées selon l'une des revendications 1 à 5, **caractérisé en ce que** la surface extérieure du support (2) comprend des poignées (25) de préhension.

7. Appareil électrique pour la réalisation de préparations culinaires en portions séparées selon l'une des revendications 1 à 6, **caractérisé en ce que** chaque récipient (4) comprend un épaulement (42) au voisinage d'un bord supérieur (43), l'épaulement (42) venant en appui sur le bord (26) de l'orifice (22) associé du support (2).

8. Appareil électrique pour la réalisation de préparations culinaires en portions séparées selon l'une des revendications 1 à 7, **caractérisé en ce que** les moyens de chauffage (12) sont disposés dans la partie centrale de la plaque métallique (10).

9. Appareil électrique pour la réalisation de préparations culinaires en portions séparées selon l'une des revendications 1 à 8, **caractérisé en ce que** les moyens de chauffage (12) sont formés par un élément chauffant blindé fixé sous la plaque métallique (10) au niveau de la cavité (11).

10. Appareil électrique pour la réalisation de préparations culinaires en portions séparées selon l'une des revendications 1 à 9, **caractérisé en ce que** la plaque métallique (10) est en aluminium.

11. Appareil électrique pour la réalisation de préparations culinaires en portions séparées selon l'une des revendications 1 à 10, **caractérisé en ce que** la plaque métallique (10) est logée dans une embase (16) de la base chauffante (1).

12. Appareil électrique pour la réalisation de préparations culinaires en portions séparées selon la revendication 11, **caractérisé en ce qu'**un joint (13) est monté sur la périphérie de la plaque métallique (10) afin d'isoler thermiquement la plaque métallique (10) de l'embase (16).

13. Appareil électrique pour la réalisation de préparations culinaires en portions séparées selon la revendication 12, **caractérisé en ce que** le support (2) repose sur la base chauffante (1) en périphérie du joint (13).

14. Appareil électrique pour la réalisation de préparations culinaires en portions séparées selon l'une des revendications 1 à 13, **caractérisé en ce que** la base chauffante (1) comprend des moyens de chauffage surfacique placés sous les récipients (4).

## Patentansprüche

1. Elektrisches Gerät zur Herstellung von Kocherzeugnissen in getrennten Portionen, aufweisend eine Heizbasis (1), eine Hauptabdeckung (3) und mindestens einen Behälter (4) zum Aufnehmen des Kocherzeugnisses, wobei das Gerät ferner einen Träger (2) umfasst, der zwischen der Heizbasis (1) und der Hauptabdeckung (3) angeordnet ist, wobei der Träger (2) ein Tablett (21) umfasst, das eine oder mehrere Öffnungen für den oder jeden Behälter (4) trägt, **dadurch gekennzeichnet, dass** die Heizbasis (1) eine Metallplatte (10) umfasst, die Heizmitteln (12) zugeordnet ist, dass die Metallplatte (10) unterhalb des Bodens (41) des oder der Behälter (4) liegt, dass der Träger (2) die Öffnung(en) (22) zum Aufhängen des Behälters (4) oder von jedem Behälter (4) umfasst, so dass der Boden (41) des Behälters (4) oder von jedem Behälter (4) von der Heizplatte (10) beabstandet ist, dass der Träger (2) einen Ring (20) umfasst, der auf dem Rand der Heizbasis (1) aufliegt, dass der Träger (2) den oder die Behälter (4) über den größten Teil der Höhe des mindestens des Behälters (4) oder der Behälter (4) umgibt, dass der Raum, der von der Metallplatte (10), dem Tablett (21) und dem Ring des Trägers (2) begrenzt ist, einen Heizraum (e) bildet, der im Wesentlichen homogen mit der Außenfläche des Behälters (4) oder der Behälter (4) ist, dass die Metallplatte (10) einen Hohlraum (11) umfasst, der zum Aufnehmen einer kalibrierten Flüssigkeitsmenge dimensioniert ist, und dass das Gerät Steuermittel umfasst, die den Betrieb der Heizmittel (12) in einem ersten Modus sicherstellen, der die Temperatur der Metallplatte (10) unter 100 °C begrenzt, und in einem zweiten Modus eine Temperatur der Metallplatte (10) von mehr als 100 °C erlaubt, um die Verdampfung von Wasser zu ermöglichen, dass in dem Hohlraum (11) enthalten ist.

2. Elektrisches Gerät zur Herstellung von Kocherzeugnissen in getrennten Portionen nach Anspruch 1, **dadurch gekennzeichnet, dass** der Boden (41) jedes Behälters (4) unter dem Träger (2) liegt.

3. Elektrisches Gerät zur Herstellung von Kocherzeugnissen in getrennten Portionen nach einem der Ansprüche 1 oder 2, **dadurch gekennzeichnet, dass** der Ring (20) aus Kunststoffmaterial hergestellt ist.

4. Elektrisches Gerät zur Herstellung von Kocherzeugnissen in getrennten Portionen nach einem der Ansprüche 1 bis 3, **dadurch gekennzeichnet, dass** das Tablett (21) abnehmbar ist.

5. Elektrisches Gerät zur Herstellung von Kocherzeugnissen in getrennten Portionen nach einem der Ansprüche 1 bis 4, **dadurch gekennzeichnet, dass** der obere Teil des Trägers (2) eine obere Kante (24) zum Abstellen der Hauptabdeckung (3) umfasst.

6. Elektrisches Gerät zur Herstellung von Kocherzeugnissen in getrennten Portionen nach einem der Ansprüche 1 bis 5, **dadurch gekennzeichnet, dass** die Außenfläche des Trägers (2) Haltegriffe (25) umfasst.

7. Elektrisches Gerät zur Herstellung von Kocherzeugnissen in getrennten Portionen nach einem der Ansprüche 1 bis 6, **dadurch gekennzeichnet, dass** jeder Behälter (4) eine Schulter (42) in der Nähe einer oberen Kante (43) umfasst, wobei die Schulter (42) an der Kante (26) der dem Träger (2) zugeordneten Öffnung (22) anliegt.

8. Elektrisches Gerät zur Herstellung von Kocherzeugnissen in getrennten Portionen nach einem der Ansprüche 1 bis 7, **dadurch gekennzeichnet, dass** die Heizmittel (12) im zentralen Teil der Metallplatte (10) angeordnet sind.

9. Elektrisches Gerät zur Herstellung von Kocherzeugnissen in getrennten Portionen nach einem der Ansprüche 1 bis 8, **dadurch gekennzeichnet, dass** die Heizmittel (12) durch ein abgeschirmtes Heizelement gebildet sind, das unter der Metallplatte (10) an dem Hohlraum (11) befestigt ist.

10. Elektrisches Gerät zur Herstellung von Kocherzeugnissen in getrennten Portionen nach einem der Ansprüche 1 bis 9, **dadurch gekennzeichnet, dass** die Metallplatte (10) aus Aluminium besteht.

11. Elektrisches Gerät zur Herstellung von Kocherzeugnissen in getrennten Portionen nach einem der Ansprüche 1 bis 10, **dadurch gekennzeichnet, dass** die Metallplatte (10) in einem Sockel (16) der Heizbasis (1) untergebracht ist.

12. Elektrisches Gerät zur Herstellung von Kocherzeugnissen in getrennten Portionen nach Anspruch 11, **dadurch gekennzeichnet, dass** eine Dichtung (13) an dem Rand der Metallplatte (10) angebracht ist, um die Metallplatte (10) thermisch von dem Sockel (16) zu isolieren.

13. Elektrisches Gerät zur Herstellung von Kocherzeugnissen in getrennten Portionen nach Anspruch 12, **dadurch gekennzeichnet, dass** der Träger (2) auf der Heizbasis (1) an dem Rand der Dichtung (13) aufliegt.

14. Elektrisches Gerät zur Herstellung von Kocherzeugnissen in getrennten Portionen nach einem der Ansprüche 1 bis 13, **dadurch gekennzeichnet, dass** die Heizbasis (1) Oberflächenheizmittel umfasst, die unter den Behältern (4) angeordnet sind.

## Claims

1. Electrical appliance for producing culinary preparations in separate portions, comprising a heating base (1), a main lid (3), and at least one container (4) for holding the food preparation, the appliance further comprising a carrier (2) inserted between the heating base (1) and the main lid (3), the carrier (2) comprising a plateau (21) carrying an opening or openings (22) for the or for each container (4), **characterised in that** the heating base (1) comprises a metal plate (10) associated with means for heating (12), the metal plate (10) extending below the bottom (41) of the container or containers (4), **in that** the carrier (2) comprises the opening or openings (22) in order to suspend the or each container (4) in such a way that the bottom (41) of the or of each container (4) is separated from the metal plate (10), **in that** the carrier (2) comprises a ring (20) resting on the periphery of the heating base (1), the carrier (2) surrounding the container or containers (4) on the major portion of the height of the container or containers (4), the space delimited by the metal plate (10), the plateau (21) and the ring (20) of the carrier (2) forming a heating space (e) that is substantially homogeneous of the outer surface of the container or containers (4), **in that** the metal plate (10) comprises a cavity (11) dimensioned to receive a calibrated quantity of liquid, and **in that** the appliance comprises control means that provide the operation of the means for heating (12) according to a first mode limiting the temperature of the metal plate (10) below 100 °C and according to a second mode authorising a temperature of the metal plate (10) greater than 100 °C, in order to allow for the evaporation of the water contained in the cavity (11).

2. Electrical appliance for producing culinary preparations in separate portions according to claim 1, **characterised in that** the bottom (41) of each container (4) exceeds below the carrier (2).

3. Electrical appliance for producing culinary preparations in separate portions according to one of claims 1 or 2, **characterised in that** the ring (20) is made from plastic material.

4. Electrical appliance for producing culinary preparations in separate portions according to one of claims 1 to 3, **characterised in that** the plateau (21) is removable.

5. Electrical appliance for producing culinary preparations in separate portions according to one of claims 1 to 4, **characterised in that** the upper portion of the carrier (2) comprises an upper edge (24) in order to place the main lid (3).

6. Electrical appliance for producing culinary preparations in separate portions according to one of claims 1 to 5, **characterised in that** the outer surface of the carrier (2) comprises grasping handles (25).

7. Electrical appliance for producing culinary preparations in separate portions according to one of claims 1 to 6, **characterised in that** each container (4) comprises a shoulder (42) in the vicinity of an upper edge (43), the shoulder (42) bearing on the edge (26) of the opening (22) associated with the carrier (2).

8. Electrical appliance for producing culinary preparations in separate portions according to one of claims 1 to 7, **characterised in that** the means for heating (12) are arranged in the central portion of the metal plate (10).

9. Electrical appliance for producing culinary preparations in separate portions according to one of claims 1 to 8, **characterised in that** the means for heating (12) are formed by a shielded heating element fixed under the metal plate (10) at the level of the cavity (11).

10. Electrical appliance for producing culinary preparations in separate portions according to one of claims 1 to 9, **characterised in that** the metal plate (10) is made of aluminium.

11. Electrical appliance for producing culinary preparations in separate portions according to one of claims 1 to 10, **characterised in that** the metal plate (10) is housed in a base (16) of the heating base (1).

12. Electrical appliance for producing culinary preparations in separate portions according to claim 11, **characterised in that** a seal (13) is mounted on the periphery of the metal plate (10) so as to thermally isolate the metal plate (10) from the base (16).

13. Electrical appliance for producing culinary preparations in separate portions according to claim 12, **characterised in that** the carrier (2) rests on the heating base (1) at the periphery of the seal (13).

14. Electrical appliance for producing culinary preparations in separate portions according to one of claims 1 to 13, **characterised in that** the heating base (1) comprises means for surface heating placed under the containers (4).
